# EUROPÄISCHE PATENTSCHRIFT

(11) **EP 3 868 263 B1**
(45) Veröffentlichungstag und Bekanntmachung des Hinweises auf die Patenterteilung: **03.07.2024**
(21) Anmeldenummer: 21153932.5
(22) Anmeldetag: 28.01.2021
(51) Int. Cl.: A47J 31/44, A47J 31/52, A47J 31/60

(54) **KAFFEEVOLLAUTOMAT**
COFFEE MACHINE
MACHINE À CAFÉ AUTOMATIQUE

(30) Priorität: 18.02.2020 DE 102020202043
(43) Veröffentlichungstag der Anmeldung: 25.08.2021
(73) Patentinhaber: BSH Hausgeräte GmbH, 81739 München (DE)
(72) Erfinder: Fremerey, Maximilian, 97633 Saal an der Saale (DE); Gius, Josef, 83374 Traunwalchen (DE); Hassfurter, Stefan, 96126 Maroldsweisach (DE); Helminger, Markus, 83346 Bergen (DE); Kleinlein, Philipp, 81371 München (DE); Kühnel, Markus, 01454 Radeberg (DE); Mathes, Anton, 83364 Neukirchen am Teisenberg (DE); Rieperdinger, Nina, 83355 Grabenstätt (DE); Söllner, Christoph, 81475 München (DE)

(56) Entgegenhaltungen:
- CH-A1- 707 837
- DE-A1-102013 106 540
- DE-U1-202012 103 944

## Beschreibung

Die vorliegende Erfindung betrifft einen Kaffeevollautomaten mit einem Getränkeauslauf sowie mit einem darunter angeordneten Tassenpodest mit einer Tropfschale, gemäß dem Oberbegriff des Anspruchs 1.

Derartige Kaffeevollautomaten sind z.B. aus der DE 10 2013 106 540 A1, der DE 20 2012 103 944 U1 und der CH 707 837 A1 bekannt.

Um einen Kaffeevollautomaten langfristig einwandfrei und hygienisch betreiben zu können, werden insbesondere die kaffeeführenden Leitungen sowohl üblicherweise vor einem Erstbezug eines Kaffeegetränks als auch periodisch zwischen einzelnen Getränkezubereitungsprozessen gereinigt. Hierzu wird ein Spülvorgang durchgeführt, bei welchem vorzugsweise der vollständige Flüssigkeitsweg zur Entfernung von Pulver-, Milch- und Restwasserresten durchgespült wird. Insbesondere moderne und WLANfähige Kaffeevollautomaten bieten bereits heute die Möglichkeit, Kaffeegetränke vorzubestellen, beispielsweise mittels einer App, sodass diese beispielsweise nach einem Aufstehen am Morgen sofort zur Verfügung stehen.

Nachteilig hierbei ist jedoch, dass für den Bezug eines derartigen vorbestellten Kaffeegetränks ein Getränkebehälter bereits unter einem Getränkeauslauf des Kaffeevollautomaten platziert werden muss, wodurch dieser nicht nur das vorbestellte Kaffeegetränk aufnimmt, sondern auch das vor der erstmaligen Benutzung durch die kaffeeführenden Leitungen gepumpte Spülwasser, wodurch der Geschmack des gewünschten Kaffeegetränks in nicht unerheblicher Weise negativ beeinträchtigt werden kann.

Die vorliegende Erfindung beschäftigt sich daher mit dem Problem, für einen Kaffeevollautomaten der gattungsgemäßen Art eine verbesserte oder zumindest eine alternative Ausführungsform anzugeben, die die aus dem Stand der Technik bekannten Nachteile vermeidet.

Dieses Problem ist erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einen Kaffeeautomaten derart auszubilden, dass über diesen eine Fernbestellung bzw. Vorbestellung von Getränken, insbesondere von Kaffeegetränken, möglich ist, ohne dass befürchtet werden muss, dass zuvor für einen Spülvorgang verwendetes Spülwasser ebenfalls in einem Getränkebehälter für den gewünschten Kaffee landet und sich dadurch in unerwünschter Weise mit diesem mischt. Hierzu ist eine Vorrichtung vorgesehen, die prinzipiell nach zwei unterschiedlichen Alternativen ausgebildet sein kann, nämlich in der Weise, dass sie aus dem Getränkeauslauf austretendes Spülwasser am Getränkebehälter vorbeileitet oder dass der Getränkebehälter erst dann unter dem Getränkeauslauf platziert wird, wenn der Spülvorgang abgeschlossen ist. Der erfindungsgemäße Kaffeevollautomat besitzt dabei den zuvor erwähnten Getränkeauslauf sowie einen darunter angeordneten Tassenpodest mit einer Tropfschale, auf welchem ein Getränkebehälter abstellbar ist. Ebenfalls vorgesehen ist eine Steuereinrichtung, die derart ausgebildet ist, dass sie bei einem gewünschten Getränkebezug, beispielsweise einer Vorbestellung von Kaffee, zunächst einen Spülvorgang aktiviert, Spülwasser über den Getränkeauslauf ausgibt und diesen spült und anschließend das ausgewählte Getränk ausgibt. Hierdurch kann zuverlässig gewährleistet werden, dass die kaffeeführenden Leitungen, zumindest aber der Getränkeauslauf, insbesondere vor einer Erstinbetriebnahme am Morgen, gespült wird. Erfindungsgemäß ist nun die zuvor beschriebene Vorrichtung vorgesehen, die derart ausgebildet ist, dass sie trotz auf dem Tassenpodest unter dem Getränkeauslauf abgestelltem Getränkebehälter Spülwasser in die Tropfschale leitet. Die erfindungsgemäße Ausführungsform ermöglicht es einem Benutzer, beispielsweise bereits an einem Vorabend, einen Getränkebehälter auf dem Tassenpodest zu platzieren und den Kaffeevollautomaten entsprechend zu programmieren, sodass dieser beispielsweise am darauffolgenden Morgen zu einer vordefinierten Uhrzeit ein Kaffeegetränk zubereitet. Dies stellt eine erhebliche Komfortsteigerung für einen Nutzer bzw. eine Nutzerin dar, da dieser/diese nicht frühmorgens die Inbetriebnahme des Kaffeevollautomaten sowie den Spülvorgang und den Getränkebezug abwarten muss, sondern diese Tätigkeiten unabhängig vom jeweiligen Benutzer bzw. von der jeweiligen Benutzerin erfolgen können. Bei der Ausführungsform der Erfindung ist es dabei möglich, einen später zu erfolgenden Kaffeebezug einzustellen, beispielsweise über eine Smartphone-App vorzubestellen, und den hierfür vorgesehenen Getränkebehälter auf dem Tassenpodest entweder unter dem Getränkeauslauf zu platzieren, ohne dass dabei befürchtet werden muss, dass Spülwasser in unerwünschter Weise in den Getränkebehälter gelangt und sich mit dem herzustellenden Kaffeegetränk vermischt.

Erfindungsgemäß ist eine Tassenpodestauflage vorgesehen, die um eine erste Drehachse schwenkbar gelagert ist, ebenso wie eine um eine zweite Drehachse schwenkbar gelagerte Ableitvorrichtung, die einen Spülwasserauffangbereich und ein Spülwasserreservoir besitzt. Der Spülwasserauffangbereich und das Spülwasserreservoir sind dabei über einen an der zweiten Drehachse drehbar gelagerten Mittelbereich der Ableitvorrichtung wippenartig miteinander verbunden, wobei die Ableitvorrichtung in einer ersten Position mit ihrem Spülwasserauffangbereich unter den Getränkeauslauf geschwenkt ist. In dieser Position, welche beispielsweise während des Spülvorgangs eingenommen ist, wird das Spülwasser über die Ableitvorrichtung in die Tropfschale geleitet und gelangt somit nicht in den unter dem Getränkeauslauf abgestellten Getränkebehälter. Das aus dem Getränkeauslauf austretende Spülwasser wird dabei während des Spülvorgangs vom Spülwasserauffangbereich aufgefangen und über den Mittelbereich des Spülwasserreservoirs geleitet.

Um ein selbsttätiges Verstellen der Ableitvorrichtung nach Beendigung des Spülvorgangs zu erreichen, ist die Ableitvorrichtung entsprechend einer besonders bevorzugten Ausführungsform derart ausgebildet, dass sie ab einem vordefinierten Spülwasserpegel im Spülwasserreservoir um die zweite Achse in eine zweite Position verdreht wird und dabei der Spülwasserauffangbereich unter dem Getränkeauslauf herausgeschwenkt wird. In der zweiten Position der Ableitvorrichtung kann somit aus dem Getränkeauslauf austretende Flüssigkeit, dann Kaffee, direkt in den darunter abgestellten Getränkebehälter eingefüllt werden.

Bei einer vorteilhaften Weiterbildung der erfindungsgemäßen Lösung ist die Ableitvorrichtung derart ausgebildet, dass sich das Spülwasserreservoir bei sich in ihrer zweiten Position befindlichen Ableitvorrichtung in die Tropfschale entleert. Das Spülwasserreservoir an der Ableitvorrichtung kann beispielsweise als in Querschnitt dreieckförmige Aufnahmemulde ausgebildet sein, die bei sich in ihrer ersten Position befindlichen Ableitvorrichtung mit einer Spitze nach unten zeigt und dadurch in der Lage ist, Spülwasser aufzunehmen, während sie in ihrer zweiten Position so weit verdreht ist, dass das darin aufgefangene Spülwasser in die darunter angeordnete Tropfschale ablaufen kann. Hierdurch ist es problemlos möglich, die Ableitvorrichtung bzw. deren Spülwasserreservoir periodisch zu entleeren, wodurch sich aufgrund des reduzierten Gewichts im Bereich des Spülwasserreservoirs die Ableitvorrichtung wieder um die zweite Drehachse entgegengesetzt verdreht und ihren Spülwasserauffangbereich unter den Getränkeauslauf schwenkt. Ein unbeabsichtigtes Verschwenken der Ableitvorrichtung in ihre erste Position kann dabei durch eine entsprechende Rastverbindung, wie sie im nachfolgenden Absatz näher erläutert wird, vermieden werden.

Zweckmäßig ist an der Ableitvorrichtung ein Rastelement angeordnet, welches mit einem zugehörigen und an der Tassenpodestauflage angeordneten Gegenrastelement verrastet ist, sofern sich die Ableitvorrichtung in ihrer zweiten Position befindet. Ein derartiges Rastelement und Gegenrastelement bildet somit eine Rastverbindung, die ein unbeabsichtigtes Verschwenken bzw. Verdrehen der Ableitvorrichtung von ihrer zweiten Position in ihre erste Position zuverlässig, aber zugleich mechanisch äußerst einfach verhindert.

Bei einer weiteren vorteilhaften Ausführungsform der erfindungsgemäßen Lösung ist eine Feder vorgesehen, die Tassenpodestauflage von unten in eine das ableitvorrichtungsseitige Rastelement freigebende erste Stellung vorspannt, wobei die Tassenpodestauflage bei darauf abgestelltem Getränkebehälter in eine zweite Stellung niedergedrückt ist, in der das Gegenrastelement mit dem Rastelement verrastet und die Ableitvorrichtung in ihrer zweiten Position fixiert ist, während bei von der Tassenpodestauflage abgenommenem Getränkebehälter die Tassenpodestauflage durch die Feder nach oben verstellt wird und das ableitvorrichtungsseitige Rastelement freigibt. Mit der erfindungsgemäßen Ableitvorrichtung kann somit das Spülwasser an dem Getränkebehälter vorbei und direkt in die Tropfschale geleitet werden. Die Ableitvorrichtung hat dabei das zuvor beschriebene Spülwasserreservoir, das sich beim Spülvorgang mit Spülwasser füllt, wodurch sich der Schwerpunkt der Ableitvorrichtung relativ zur zweiten Drehachse verlagert und die Ableitvorrichtung demzufolge zurückschwenkt, wodurch der Spülwasserauffangbereich zurückgeschwenkt wird. Dadurch wird die Getränkeausgabe aus dem Getränkeauslauf in den darunter abgestellten Getränkebehälter freigegeben, wobei sich der Inhalt des Spülwasserreservoirs in die Tropfschale entleert. In der Endlage, d. h. in der zweiten Position der Ableitvorrichtung, rastet diese an einem vom Gewicht des Getränkebehälters niedergedrückten Rastelement ein, wodurch die Ableitvorrichtung in ihrer zweiten Position gehalten wird. Wird der Getränkebehälter, beispielsweise die Tasse, vom Tassenpodest entnommen, bewirkt die Feder ein Anheben der Tassenpodestauflage, wodurch sich die Rastverbindung zwischen dem tassenpodestauflagenseitigen Rastelement und dem ableitvorrichtungsseitigen Gegenrastelement löst und die Ableitvorrichtung mit ihrem Spülwasserauffangbereich wieder unter den Getränkeauslauf schwenkt.

Durch eine derartige Ableitvorrichtung kann insbesondere eine lästige Zwischenwartezeit zum Abwarten des Spülvorgangs entfallen, wobei ein Kunde den Getränkebehälter sofort auf dem Tassenpodest platzieren und sein Getränk, beispielsweise einen Kaffee, auswählen kann, wobei nach Abschluss beider Vorgänge, d. h. dem Spülvorgang und einem Getränkezubereitungsvorgang, der Getränkebehälter entnommen werden kann. Hierdurch ist insbesondere auch eine Fernsteuerung des Kaffeevollautomaten mit gewünschter Zeitvorwahl problemlos möglich. Durch das Zurückschwenken der Ableitvorrichtung in ihre erste Position direkt nach der Entnahme des Getränkebehälters können restliche Tropfen vom Getränkeauslauf abgefangen werden, wodurch ein Verschmutzen der Tassenpodestauflage vermieden werden kann. Da generell nur Flüssigkeiten beim Überlauf von zu befüllenden Getränkebehältern aufgefangen werden müssen und keine großen Mengen aus großer Höhe herabfließenden Spülwassers, kann die Tassenpodestauflage designerisch frei gestaltet werden. Zudem ist die Ableitvorrichtung konstruktiv einfach aufgebaut und leicht mit der Tropfschale zu entnehmen und zu reinigen, wobei insbesondere keine zusätzlichen Aktuatoren, Sensoren oder Elektronik bzw. Software zur Steuerung erforderlich sind, da eine rein mechanische Funktion vorliegt. Dies ist besonders kostengünstig.

Entsprechend einer weiteren Ausführungsform eines nicht erfindungsgemäßen Kaffeevollautomaten ist die Vorrichtung als verstellbarer Getränkeauslauf ausgebildet, der zwischen einer ersten Stellung und einer zweiten Stellung verstellbar ist, wobei in der ersten Stellung Spülwasser in die Tropfschale geleitet wird. In diesem Fall kann der Getränkeauslauf beispielsweise translatorisch verstellbar oder verschwenkbar sein und beispielsweise über ein Hebelgestänge, einen Magneten oder einen Elektromotor entsprechend zwischen seiner ersten und zweiten Stellung verstellt werden. Bei einer besonders bevorzugten Ausführungsform wird beispielsweise ein elektromagnetischer Antrieb des verstellbaren Getränkeauslaufs verwendet, der im regulären Betrieb stromlos ist, wobei über die Schwerkraft und/oder einen Federmechanismus zugleich sichergestellt wird, dass in diesem regulären Betrieb der Getränkeauslauf und/oder ein Spülschild in seiner zweiten Stellung bzw. der Getränkeauslauf ebenfalls in seiner zweiten Stellung steht. Auch bei einer derartigen Ausführungsform kann gewährleistet werden, dass Spülwasser nicht in unerwünschter Weise in den Getränkebehälter gelangt und dort ein Kaffeegetränk geschmacklich beeinträchtigt. Auch hier kann ein Kaffeebezug programmiert bzw. ferngesteuert werden.

Bei einer weiteren Ausführungsform eines nicht erfindungsgemäßen Kaffeevollautomaten ist die Vorrichtung auf dem Getränkebehälter selbst anordenbar und weist einen ersten Aufnahmebehälter auf, der in einer ersten Stellung oberhalb des Getränkebehälters angeordnet und über einen Auslauf fluidisch und über ein Koppelgestänge mechanisch mit einem neben dem Getränkebehälter angeordneten zweiten Aufnahmebehälter verbunden ist. Der erste und zweite Aufnahmebehälter sind dabei aber einer vordefinierten Menge an aufgenommenem Spülwasser in eine zweite Stellung verstellt, in welcher der erste Aufnahmebehälter nicht mehr oberhalb des Getränkebehälters angeordnet ist. Mittels einer derartigen erfindungsgemäßen Ausführungsform der Vorrichtung kann eine rein mechanisch funktionierende Vorrichtung geschaffen werden, die zudem völlig unabhängig von dem Kaffeevollautomaten eingesetzt bzw. angewendet werden kann und sich dadurch insbesondere als Nachrüstlösung besonders eignet.

Die Vorrichtung wird zunächst auf dem Getränkebehälter platziert und dieser samt der Vorrichtung unter dem Getränkeauslauf des Kaffeevollautomaten angeordnet. Nun kann beispielsweise ein Vorprogrammieren bzw. Fernprogrammieren oder Fernsteuern des Getränkevollautomaten, insbesondere mittels entsprechender App, beispielsweise Home Connect, erfolgen, bei welchem ein späterer Getränkebezug programmiert wird. Wird daraufhin der Kaffeevollautomat zu einem späteren Zeitpunkt aktiviert, erfolgt zunächst ein Spülen des Getränkeauslaufs, wodurch Spülwasser in den ersten Aufnahmebehälter und über den Auslauf in den zweiten Aufnahmebehälter fließt. Da der erste Aufnahmebehälter oberhalb des Getränkebehälters angeordnet ist, gelangt kein Spülwasser in den Getränkebehälter. Ist eine vordefinierte Menge an Spülwasser im zweiten Aufnahmebehälter angeordnet, deutet dies auf einen Abschluss des Spülvorgangs hin, woraufhin der zweite Aufnahmebehälter und mit diesem der erste Aufnahmebehälter in eine seitliche Stellung verschwenkt werden, in welcher der erste Aufnahmebehälter nicht mehr oberhalb des Getränkebehälters angeordnet ist und dadurch ein Getränkebezug erfolgen kann. Eine Rückstellung der erfindungsgemäßen Vorrichtung kann beispielsweise über eine entsprechende Feder vorgesehen werden. Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen. Dabei zeigen, jeweils schematisch,
- Fig. 1: einen erfindungsgemäßen Kaffeevollautomaten entsprechend einer ersten Ausführungsform mit einer schwenkbaren Ableitvorrichtung,
- Fig. 2a: eine Draufsicht auf einen nicht erfindungsgemäßen Kaffeevollautomaten mit einem Schieber in einer Ruheposition,
- Fig. 2b: eine Darstellung wie in Figur 2a, wobei der Getränkebehälter bereits in seine zu befüllende Position geschoben ist,
- Fig. 3: eine weitere alternative Ausführungsform des nicht erfindungsgemäßen Kaffeevollautomaten in einer Draufsicht mit einer ein Förderband aufweisenden Vorrichtung,
- Fig. 4: eine Ansicht auf einen nicht erfindungsgemäßen Kaffeevollautomaten mit einer Vorrichtung mit einem verfahrbaren Schlitten,
- Fig. 5: unterschiedliche Ansichten des nicht erfindungsgemäßen verfahrbaren Schlittens mit darauf abgestelltem Getränkebehälter,
- Fig. 6: eine Ausführungsform eines nicht erfindungsgemäßen Kaffeevollautomaten mit verstellbarem Getränkeauslauf,
- Fig. 7a: eine weitere alternative Ausführungsform eines nicht erfindungsgemäßen Kaffeevollautomaten mit einem verstellbaren Spülschild während eines Getränkebezugs,
- Fig. 7b: eine Darstellung wie in Figur 7a, jedoch mit einem in seiner ersten Stellung befindlichen Spülschild,
- Fig. 8a: eine Darstellung ähnlich wie in Figur 6, jedoch mit einem verschwenkbaren Getränkeauslauf während eines Getränkebezugs,
- Fig. 8b: eine Darstellung wie in Figur 8a, jedoch in einer ersten Stellung des Getränkeauslaufs, in welcher Spülwasser am Getränkebehälter vorbeigeleitet wird,
- Fig. 9a: eine weitere alternative Ausführungsform eines nicht erfindungsgemäßen Getränkeautomaten bzw. einer Vorrichtung für einen solchen, wobei die Vorrichtung einen ersten und zweiten Aufnahmebehälter aufweist und in einer ersten Stellung angeordnet ist,
- Fig. 9b: eine Darstellung wie in Figur 9a, jedoch in einer zweiten Stellung,
- Fig. 10: eine Ansicht auf einen nicht erfindungsgemäßen Kaffeevollautomaten mit einer einen Tassenwechsler aufweisenden Vorrichtung.

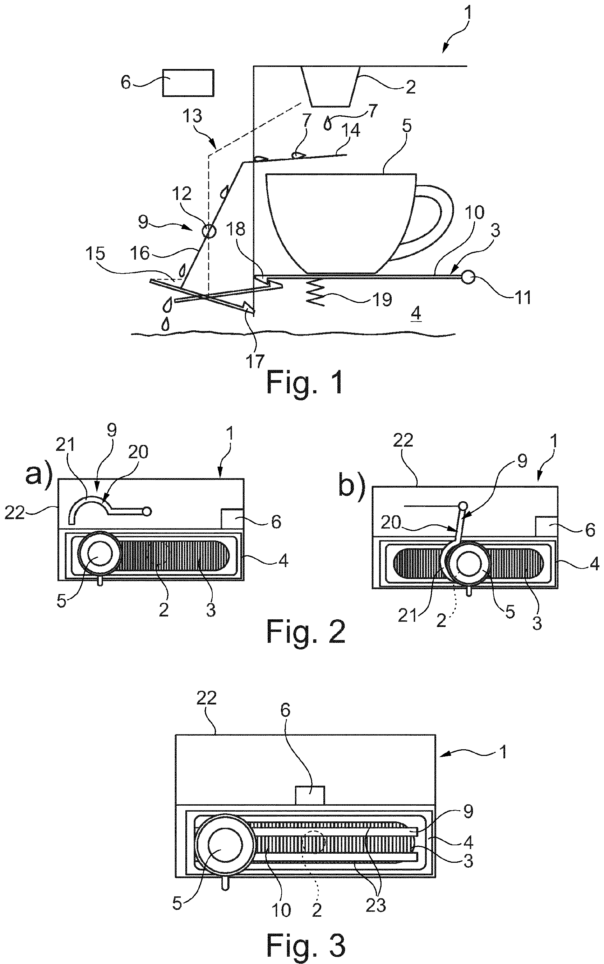

Entsprechend den Figuren 1 weist ein erfindungsgemäßer Kaffeevollautomat 1 einen Getränkeauslauf 2 sowie einen darunter angeordneten Tassenpodest 3 mit einer Tropfschale 4 auf. Der Tassenpodest 3 und die Tropfschale 4 sind dabei nicht in sämtlichen Ausführungsformen separat dargestellt. Ebenfalls vorgesehen ist eine Steuereinrichtung 6, die derart ausgebildet ist, dass bei einem gewünschten Getränkebezug zunächst ein Spülvorgang aktiviert, Spülwasser 7 über den Getränkeauslauf 2 ausgegeben und dieser gespült wird und anschließend das ausgewählte Getränk 8 ausgegeben wird. Ebenfalls vorgesehen ist eine Vorrichtung 9, die derart ausgebildet ist, dass sie trotz auf dem Tassenpodest 3 unter dem Getränkeauslauf 2 abgestelltem Getränkebehälter 5 Spülwasser 7 in die Tropfschale 4 leitet.

Im Folgenden sollen nun die einzelnen unterschiedlichen Vorrichtungen 9 entsprechend den Figuren beschrieben werden:
Entsprechend der Figur 1 weist der Tassenpodest 3 eine Tassenpodestauflage 10 auf, die um eine erste Drehachse 11 schwenkbar gelagert ist. Die Vorrichtung 9 weist darüber hinaus eine um eine zweite Drehachse 12 schwenkbare Ableitvorrichtung 13 mit einem Spülwasserauffangbereich 14 und einem Spülwasserreservoir 15, die über einen an der zweiten Drehachse 12 drehbar gelagerten Mittelbereich 16 wippenartig miteinander verbunden sind. Die Ableitvorrichtung 13 ist dabei zwischen einer ersten Position und einer zweiten Position verschwenkbar, wobei sie in der ersten Position mit ihrem Spülwasserauffangbereich 14 unter den Getränkeauslauf 2 geschwenkt ist. Dies ist gemäß der Figur 1 mit durchgehender Linie gezeichnet, während die zweite Position, in welcher die Ableitvorrichtung 13 mit ihrem Spülwasserauffangbereich 14 nicht unter den Getränkeauslauf 2 ragt, mit unterbrochen gezeichneter Linie dargestellt ist.

In der ersten Position der Ableitvorrichtung 13 leitet diese aus dem Getränkeauslauf 2 auslaufendes Spülwasser 7 über den Spülwasserauffangbereich 14, den Mittelbereich 16 in das Spülreservoir 15 ab. Dabei füllt sich das Spülwasserreservoir 15 langsam, bis die durch das aufgefangene Spülwasser 7 verstärkten Hebelkräfte zu einem Zurückschwenken der Ableitvorrichtung 13 führen. Dies erfolgt ab einem vordefinierten Spülwasserpegel im Spülwasserreservoir 15. Dabei wird der Spülwasserauffangbereich 14 zurückgeschwenkt, was selbstverständlich erst dann erfolgt, wenn der Spülvorgang an sich beendet ist. Erreicht die Ableitvorrichtung 13 die gemäß der Figur 1 mit unterbrochen gezeichneter Linie dargestellte zweite Position, so entleert sich das in dem Spülwasserreservoir 15 gesammelte Spülwasser 7 in die Tropfschale 4, wobei zuvor ein an der Ableitvorrichtung 13 angeordnetes Rastelement 17 mit einem an der Tassenpodestauflage 10 angeordneten Gegenrastelement 18 verrastet, wodurch ein Zurückschwenken der Ableitvorrichtung 13 in ihre erste Position zunächst unterbunden wird. Anschließend erfolgt das Befüllen des Getränkebehälters 5 mit dem ausgewählten Kaffeegetränk. Ebenfalls vorgesehen ist eine Feder 19, die die Tassenpodestauflage 10 von unten in eine das ableitvorrichtungsseitige Rastelement 17 freigebende Stellung vorspannt, wobei die Tassenpodestauflage 10 bei darauf abgestelltem Getränkebehälter 5 in eine zweite Stellung niedergedrückt ist, wie dies gemäß der Figur 1 dargestellt ist. In dieser zweiten Stellung ist das Gegenrastelement 18 mit dem Rastelement 17 verrastet und die Ableitvorrichtung 13 in ihrer zweiten Position fixiert. Wird nun der Getränkebehälter 5 von der Tassenpodestauflage 10 abgenommen, so wird Letztere durch die Feder 19 nach oben verstellt und dadurch das ableitungsvorrichtungsseitige Rastelement 17 freigegeben, wodurch die Ableitvorrichtung 13 wieder in ihre erste Position, in welcher der Spülwasserauffangbereich 14 unter dem Getränkeauslauf 2 positioniert wird, zurückschwenkt wird.

Eine derartige Vorrichtung 9 ist vergleichsweise einfach aufgebaut und kann beispielsweise zu dem leicht mit der Tropfschale 4 entnommen werden. Zudem erfordert eine derartige Vorrichtung 9 keinerlei weitere, insbesondere elektrische, Aktuatoren. Die Vorrichtung 9 ermöglicht es dabei, auf eine lästige Zwischenwartezeit zur Durchführung des Spülvorgangs zu verzichten, da der Kunde den Getränkebehälter 5 direkt unter dem Getränkeauslauf 2 platzieren und sein Getränk auswählen kann, wobei nach Abschluss beider Vorgänge, d. h. des Spülvorgangs und des Getränkeausgabevorgangs, der Getränkebehälter 5 entnommen werden kann, ohne dass dabei befürchtet werden muss, dass zuvor zum Spülen verwendetes Spülwasser 7 im Getränkebehälter 5 landet. Da generell bei dieser Vorrichtung 9 nur Flüssigkeiten beim Überlaufen von zu befüllenden Getränkebehältern 5 aufgefangen werden müssen und keine großen Mengen aus großer Höhe herabfließenden Spülwassers 7, kann zudem die Tassenpodestauflage 10 designtechnisch frei gestaltet werden. Zudem funktioniert die gesamte Vorrichtung 9 rein mechanisch, wodurch es kostengünstig implementierbar ist.

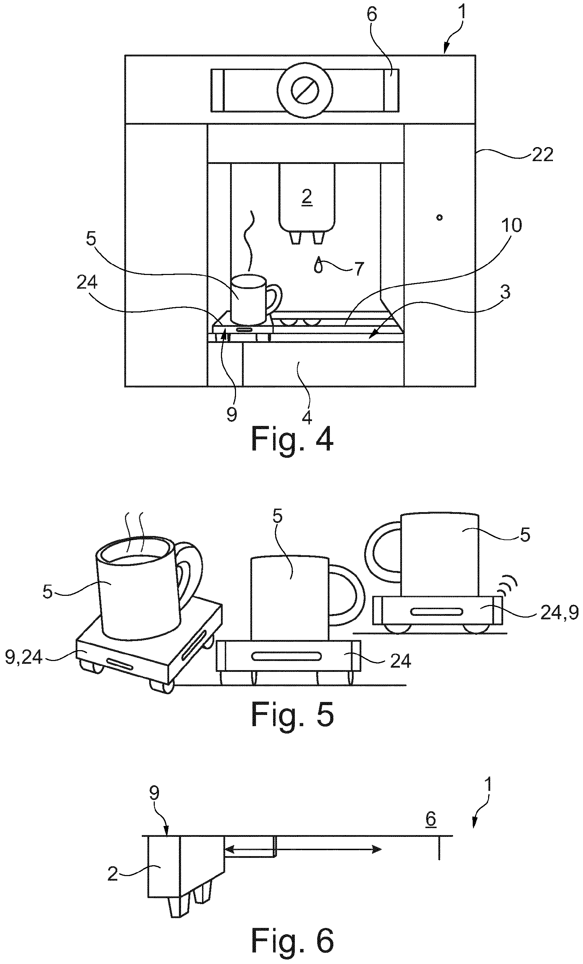

Bei einer alternativen Ausführungsform des nicht erfindungsgemäßen Kaffeevollautomaten kann der Getränkeauslauf 2 verschoben werden, wie dies gemäß der Figur 6 dargestellt ist. In diesem Fall kann beispielsweise der Getränkeauslauf 2 während des Spülvorgangs neben den Getränkebehälter 5 verfahren werden und erst nach Abschluss desselben wieder über diesem angeordnet werden.

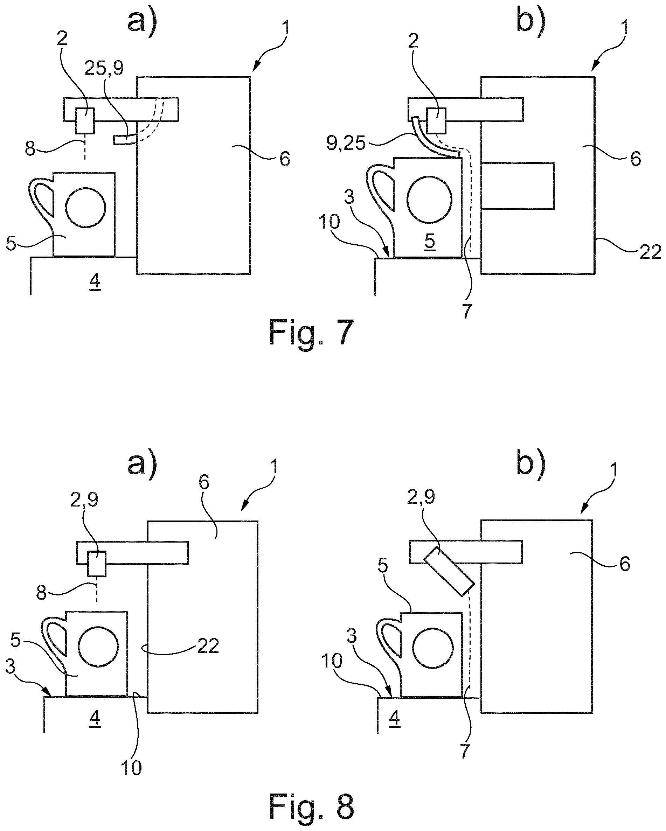

Gemäß den Figuren 8a und 8b ist ein Kaffeevollautomat 1 gezeigt, bei welchem die Vorrichtung 9 als verstellbarer Getränkeauslauf 2 ausgebildet ist, der zwischen einer ersten Stellung (vgl. Figur 8b) und einer zweiten Stellung (vgl. Figur 8a) verstellbar ist, wobei in der ersten Stellung Spülwasser 7 in die Tropfschale 4 geleitet wird.

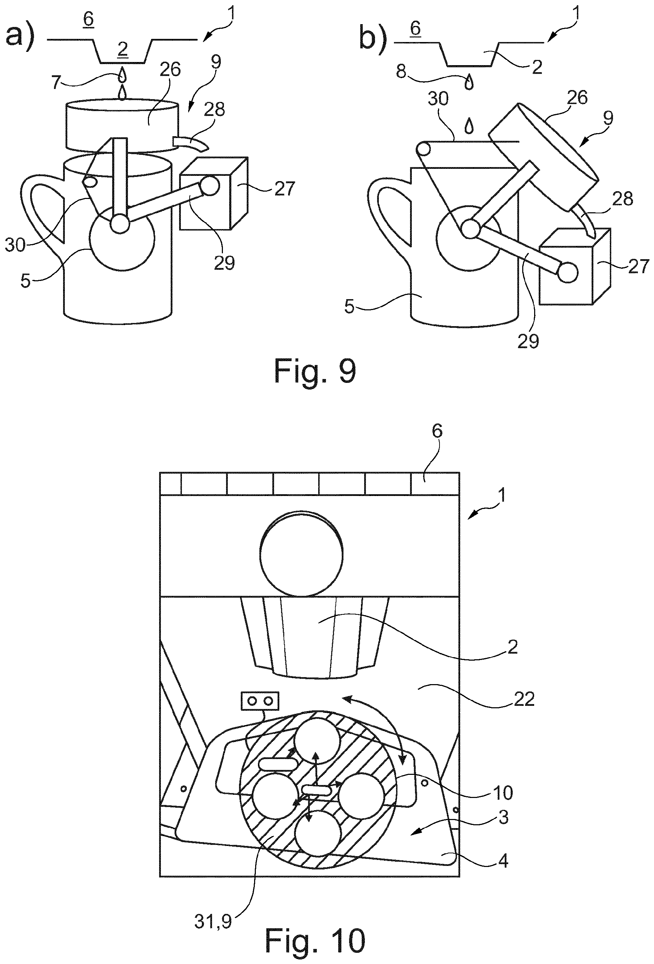

Gemäß den Figuren 9a und 9b ist die Vorrichtung 9 auf dem Getränkebehälter 5 anordenbar und besitzt einen ersten Aufnahmebehälter 26, der in einer ersten Stellung (vgl. Figur 9a) oberhalb des Getränkebehälters 5 angeordnet und über einen Auslauf 28 fluidisch und über ein Koppelgestänge 29 mechanisch mit einem neben dem Getränkebehälter 5 angeordneten zweiten Aufnahmebehälter 27 verbunden ist. Der erste und zweite Aufnahmebehälter 26, 27 werden dabei ab einer vordefinierten Menge an aufgenommenem Spülwasser 7 in eine zweite Stellung (vgl. Figur 9b) verstellt, in der der erste Aufnahmebehälter 26 nicht mehr oberhalb des Getränkebehälters 5 angeordnet ist, sodass in diesem Stadium das Getränk 8 direkt über den Getränkeauslauf 2 in den Getränkebehälter 5 umgefüllt werden kann. Über eine entsprechende Feder 30 ist die Vorrichtung 9 vorzugsweise in ihre erste Stellung (vgl. Figur 9a) vorgespannt. Die gesamte Vorrichtung 9 kann dabei selbstverständlich auch am Getränkeautomaten 1 angeordnet sein. Gemäß den Figuren 9a und 9b wird beim Start des Spülvorgangs Spülwasser 7 über den Getränkeauslauf 2 in den ersten Aufnahmebehälter 26, den Auslauf 28 in den zweiten Aufnahmebehälter 27 abgelassen und sorgt dort für eine Zunahme des Gewichts. Überschreitet dieses Gewicht ein vordefiniertes Drehmoment, welches durch die Feder 30 als Gegendrehmoment vorgegeben ist, klappt die Vorrichtung 9 seitwärts und gibt die Öffnung des Getränkebehälters 5 frei. Eine Justierung der Mechanik kann dabei über eine Wahl der Federkraft erfolgen oder auch über andere Elemente, beispielsweise Magnete. Die Vorrichtung 9 kann über eine geeignete Form zur Befestigung an dem Getränkebehälter 5 ausgestaltet sein, beispielsweise kann hier ein C-förmiger Klammerhalter mit Silikon- oder Gummioberfläche auf der einem Henkel zugewandten Seite auf den Getränkebehälter 5 aufgeschoben werden, um eine kraftschlüssige aber dennoch lösbare Verbindung herzustellen. Weiterhin ist denkbar, dass anstatt der Feder 30 ein anderer, reibungsbasierter Halt im Mechanismus verwendet wird, bei dem die Hebelkraft nur die Haftreibung überwinden muss, um ein Einfüllen des Getränks 8 in den Getränkebehälter 5 zu ermöglichen, d. h. die Öffnung des Getränkebehälters 5 freizugeben. Auch hier ist es möglich, einen Kaffeebezug vorzuprogrammieren, ohne dass dabei befürchtet werden muss, dass Spülwasser 7 in unerwünschter Weise in den Getränkebehälter 5 gelangt.

Der zweite Aufnahmebehälter 27 ist dabei um eine Achse drehbar am Koppelgestänge 29 angebunden, während der erste Aufnahmebehälter 26 drehfest mit dem Koppelgestänge 29 verbunden ist und dadurch bei einem Verschwenken von der gemäß der Figur 9a gezeigten Position in die gemäß der Figur 9b gezeigte Position verschwenkt wird, während der zweite Aufnahmebehälter 27 immer waagerecht bleibt.

### Bezugszeichenliste

- 1: Kaffeevollautomat
- 2: Getränkeauslauf
- 3: Tassenpodest
- 4: Tropfschale
- 5: Getränkebehälter
- 6: Steuereinrichtung
- 7: Spülwasser
- 8: Getränk
- 9: Vorrichtung
- 10: Tassenpodestauflage
- 11: erste Drehachse
- 12: zweite Drehachse
- 13: Ableitvorrichtung
- 14: Spülwasserauffangbereich
- 15: Spülwasserreservoir
- 16: Mittelbereich
- 17: Rastelement
- 18: Gegenrastelement
- 19: Feder
- 20: Schieber
- 21: Hakenkontur
- 22: Gehäuse
- 23: Förderband
- 24: Schlitten
- 25: Spülschild
- 26: erster Aufnahmebehälter
- 27: zweiter Aufnahmebehälter
- 28: Auslauf
- 29: Koppelgestänge
- 30: Feder
- 31: Tassenwechsler

## Patentansprüche

1. Kaffeevollautomat (1) mit einem Getränkeauslauf (2) sowie mit einem darunter angeordneten Tassenpodest (3) mit einer Tropfschale (4), auf welchem ein Getränkebehälter (5) abstellbar ist, mit einer Steuereinrichtung (6), die derart ausgebildet ist, dass bei einem gewünschten Getränkebezug zunächst ein Spülvorgang aktiviert, Spülwasser (7) über den Getränkeauslauf (2) ausgegeben und dieser gespült wird und anschließend das ausgewählte Getränk (8) ausgegeben wird, **dadurch gekennzeichnet, dass** eine Vorrichtung (9) vorgesehen ist, die derart ausgebildet ist, dass sie trotz auf dem Tassenpodest (3) unter dem Getränkeauslauf (2) abgestelltem Getränkebehälter (5) Spülwasser (7) in die Tropfschale (4) leitet, **dadurch gekennzeichnet, dass** eine Tassenpodestauflage (10) um eine erste Drehachse (11) schwenkbar gelagert ist und eine um eine zweite Drehachse (12) schwenkbare Ableitvorrichtung (13) einen Spülwasserauffangbereich (14) und ein Spülwasserreservoir (15) aufweist, die über einen an der zweiten Drehachse (12) drehbar gelagerten Mittelbereich (16) wippenartig miteinander verbunden sind, wobei die Ableitvorrichtung (13) in einer ersten Position mit ihrem Spülwasserauffangbereich (14) unter den Getränkeauslauf (2) geschwenkt ist.

2. Kaffeevollautomat nach Anspruch 1, **dadurch gekennzeichnet, dass** die Ableitvorrichtung (13) derart ausgebildet ist, dass aus dem Getränkeauslauf (2) austretendes Spülwasser (7) vom Spülwasserauffangbereich (14) aufgefangen und über den Mittelbereich (16) in das Spülwasserreservoir (15) leitbar ist.

3. Kaffeevollautomat nach Anspruch 1 oder 2, **dadurch gekennzeichnet, dass** die Ableitvorrichtung (13) derart ausgebildet ist, dass sie ab einem vordefinierten Spülwasserpegel im Spülwasserreservoir (15) um die zweite Achse (12) in eine zweite Position verdreht und dabei der Spülwasserauffangbereich (14) unter dem Getränkeauslauf (2) herausgeschwenkt wird.

4. Kaffeevollautomat nach Anspruch 3, **dadurch gekennzeichnet, dass** die Ableitvorrichtung (13) derart ausgebildet ist, dass sich das Spülwasserreservoir (15) bei sich in ihrer zweiten Position befindlichen Ableitvorrichtung (13) in die Tropfschale (4) entleert.

5. Kaffeevollautomat nach einem der Ansprüche 1 bis 4, **dadurch gekennzeichnet, dass** an der Ableitvorrichtung (13) ein Rastelement (17) angeordnet ist, welches mit einem zugehörigen und an der Tassenpodestauflage (10) angeordneten Gegenrastelement (18) verrastet ist, sofern sich die Ableitvorrichtung (13) in ihrer zweiten Position befindet.

6. Kaffeevollautomat nach Anspruch 5, **dadurch gekennzeichnet, dass** eine Feder (19) vorgesehen ist, die Tassenpodestauflage (10) von unten in eine das ableitvorrichtungsseitige Rastelement (17) freigebende erste Stellung vorspannt, wobei die Tassenpodestauflage (10) bei darauf abgestelltem Getränkebehälter (5) in eine zweite Stellung nieder gedrückt ist, in welcher das Gegenrastelement (18) mit dem Rastelement (17) verrastet und die Ableitvorrichtung (13) in ihrer zweiten Position fixiert ist, während bei von der Tassenpodestauflage (10) abgenommenem Getränkebehälter (5) die Tassenpodestauflage (10) durch die Feder (19) nach oben verstellt ist und das ableitvorrichtungsseitige Rastelement (17) freigibt.

## Claims

1. Automatic coffee maker (1) with a beverage outlet (2) and with a cup stand (3), arranged therebelow, with a drip shelf (4), onto which a beverage container (5) can be placed, with a control facility (6) which is embodied such that a rinsing process is firstly activated when a desired beverage is prepared, rinse water (7) is output by way of the beverage outlet (2) and this is rinsed and the selected beverage (8) is then output, **characterised in that** an apparatus (9) is provided, which is embodied such that it routes rinse water (7) into the drip shelf (4) in spite of the beverage container (5) placed on the cup stand (3) below the beverage outlet (2), **characterised in that** a cup stand support (10) is supported rotatably about a first axis of rotation (11) and a sink (13) which can be pivoted about a second axis of rotation (12) has a rinse water capture area (14) and a rinse water reservoir (15) which are connected to one another in the manner of a rocker by way of a central area (16) mounted rotatably on the second axis of rotation (12), wherein the sink (13) is pivoted in a first position with its rinse water capture area (14) below the beverage outlet (2).

2. Automatic coffee maker according to claim 1, **characterised in that** the sink (13) is embodied so that rinse water (7) leaving the beverage outlet (2) is captured by the rinse water capture area (14) and can be routed into the rinse water reservoir (15) across the central area (16).

3. Automatic coffee maker according to claim 1 or 2, **characterised in that** the sink (13) is embodied so that it twists into a second position about the second axis (12) from a predefined rinse water level in the rinse water reservoir (15) and in the process the rinse water capture area (14) pivots out below the beverage outlet (2).

4. Automatic coffee maker according to claim 3, **characterised in that** the sink (13) is embodied so that the rinse water reservoir (15) empties into the drip shelf (4) when the sink (13) is located in its second position.

5. Automatic coffee maker according to one of claims 1 to 4, **characterised in that** a latching element (17) is arranged on the sink (13) and is latched with an associated counter latching element (18) which is arranged on the cup stand support (10) provided the sink (13) is located in its second position.

6. Automatic coffee maker according to claim 5, **characterised in that** a spring (19) is provided, which pretensions the cup stand support (10) from below into a first position releasing the sink-side latching element (17), wherein the cup stand support (10) is pressed down into a second position when the beverage container (5) is placed thereupon, in which second position the counter latching element (18) latches with the latching element (17) and the sink apparatus (13) is fixed in its second position, while when the beverage container (5) is removed from the cup stand support (10), the cup stand support (10) is shifted upwards by the spring (19) and the sink-side latching element (17) releases.

## Revendications

1. Machine à café intégralement automatique (1) avec un écoulement de boisson (2) ainsi qu'un support à tasse (3) disposé sous celui-ci, avec un égouttoir (4), sur lequel un contenant à boissons (5) peut être posé, avec un dispositif de commande (6) formé de telle sorte qu'en présence d'un prélèvement de boissons souhaité, un processus de lavage est tout d'abord activé, de l'eau de lavage (7) est émise à travers l'écoulement de boisson (2) et celui-ci est lavé et ensuite, la boisson sélectionnée (8) est émise, **caractérisée en ce qu'**un dispositif (9) est prévu, lequel est formé de telle sorte qu'il dirige l'eau de lavage (7) dans l'égouttoir (4) malgré la présence d'un contenant à boissons (5) posé sur le support à tasse (3) sous l'écoulement de boisson (2), **caractérisée en ce qu'**une surface d'appui de support à tasse (10) est logée de façon pivotante autour d'un premier axe de rotation (11) et un dispositif de dérivation (13) pivotant autour d'un deuxième axe de rotation (12) présente une zone de collecte d'eau de lavage (14) et un réservoir à eau de lavage (15) en liaison de type à bascule via une zone centrale (16) logée de façon pivotante sur le deuxième axe de rotation (12), dans laquelle le dispositif de dérivation (13) est pivoté dans une première position avec sa zone de collecte d'eau de lavage (14) sous l'écoulement de boisson (2).

2. Machine à café intégralement automatique selon la revendication 1, **caractérisée en ce que** le dispositif de dérivation (13) est formé de telle sorte que l'eau de lavage (7) qui s'écoule de l'écoulement de boisson (2) est collectée par la zone de collecte d'eau de lavage (14) et peut être dirigée dans le réservoir à eau de lavage (15) via la zone centrale (16).

3. Machine à café intégralement automatique selon la revendication 1 ou 2, **caractérisée en ce que** le dispositif de dérivation (13) est formé de telle sorte qu'à partir d'un niveau d'eau de lavage prédéfini dans le réservoir à eau de lavage (15), il tourne autour du deuxième axe (12) dans une deuxième position et la zone de collecte d'eau de lavage (14) est, ce faisant, pivotée sous l'écoulement de boisson (2).

4. Machine à café intégralement automatique selon la revendication 3, **caractérisée en ce que** le dispositif de dérivation (13) est formé de telle sorte que le réservoir à eau de lavage (15) se vide dans l'égouttoir (4) en présence d'un dispositif de dérivation (13) se trouvant dans sa deuxième position.

5. Machine à café intégralement automatique selon l'une des revendications 1 à 4, **caractérisée en ce qu'**un élément d'encliquètement (17) est disposé sur le dispositif de dérivation (13), l'élément d'encliquètement étant encliqueté à un élément de contre-encliquètement (18) correspondant disposé sur la surface d'appui de support à tasse (10), dans la mesure où le dispositif de dérivation (13) se trouve dans sa deuxième position.

6. Machine à café intégralement automatique selon la revendication 5, **caractérisée en ce qu'**un ressort (19) est prévu, lequel précontraint la surface d'appui de support à tasse (10) par le bas dans une première position qui libère l'élément d'encliquètement (17) côté dispositif de dérivation, dans lequel la surface d'appui de support à tasse (10) est abaissée, en présence d'un contenant à boissons (5) y déposé, dans une deuxième position, dans laquelle l'élément de contre-encliquètement (18) est encliqueté à l'élément d'encliquètement (17) et le dispositif de dérivation (13) est fixé dans sa deuxième position, tandis que dans le cas d'un contenant à boissons (5) enlevé de la surface d'appui de support à tasse (10), la surface d'appui de support à tasse (10) est déplacée vers le haut par le ressort (19) et libère l'élément d'encliquètement côté dispositif de dérivation (17).
